(19) Europäisches Patentamt
European Patent Office
Office européen des brevets

(11) **EP 2 516 198 B1**

(12) **EUROPÄISCHE PATENTSCHRIFT**

(45) Veröffentlichungstag und Bekanntmachung des Hinweises auf die Patenterteilung:
**08.01.2014   Patentblatt 2014/02**

(21) Anmeldenummer: **10779495.0**

(22) Anmeldetag: **04.11.2010**

(51) Int Cl.:
*B60L 3/00* (2006.01)          *G01K 7/42* (2006.01)
*H02P 29/02* (2006.01)      *H02M 1/32* (2007.01)

(86) Internationale Anmeldenummer:
**PCT/EP2010/066785**

(87) Internationale Veröffentlichungsnummer:
**WO 2011/085837 (21.07.2011 Gazette 2011/29)**

(54) **VERFAHREN ZUR FEHLERERKENNUNG BEI EINER DURCH EINEN WECHSELRICHTER ANGESTEUERTEN ELEKTRISCHEN MASCHINE IN EINEM KRAFTFAHRZEUG UND VORRICHTUNG ZUR ÜBERWACHUNG EINES BETRIEBS DER ELEKTRISCHEN MASCHINE**

METHOD FOR FAULT DETECTION IN AN ELECTRIC MOTOR FED BY AN INVERTER IN A MOTOR VEHICLE, AND DEVICE FOR MONITORING AN OPERATION OF THE ELECTRIC MOTOR

PROCÉDÉ DE DÉTECTION D'UN DÉFAUT DE FONCTIONNEMENT D'UNE MACHINE ÉLECTRIQUE ALIMENTÉE PAR UN ONDULEUR À BORD D'UN VÉHICULE AUTOMOBILE, AINSI QUE DISPOSITIF DE SURVEILLANCE DU FONCTIONNEMENT D'UNE MACHINE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2009   DE 102009055055**

(43) Veröffentlichungstag der Anmeldung:
**31.10.2012   Patentblatt 2012/44**

(73) Patentinhaber: **Robert Bosch GmbH**
**70442 Stuttgart (DE)**

(72) Erfinder:
• **TRUNK, Martin**
  **71696 Moeglingen (DE)**
• **BECKER, Alexander**
  **70176 Stuttgart (DE)**

(56) Entgegenhaltungen:
**EP-A2- 1 050 425          EP-A2- 1 983 640
JP-A- 11 192 926          JP-A- 2006 129 567
US-A1- 2005 204 761    US-A1- 2007 093 359
US-A1- 2009 251 831**

## Beschreibung

Die Erfindung betrifft ein Verfahren zur Fehlererkennung bei einer durch einen Wechselrichter angesteuerten elektrischen Maschine in einem Kraftfahrzeug und eine Vorrichtung zur Überwachung eines Betriebs einer durch einen Wechselrichter angesteuerten elektrischen Maschine in einem Kraftfahrzeug.

Stand der Technik

Elektrische Maschinen mit Wechselrichtern werden zum Beispiel in Hybridfahrzeugen eingesetzt, wo sie wahlweise im Motor- oder Generatorbetrieb betrieben werden. Im Motorbetrieb erzeugt die elektrische Maschine ein zusätzliches Antriebsmoment, welches einen Verbrennungsmotor, zum Beispiel in einer Beschleunigungsphase unterstützt, im Generatorbetrieb erzeugt sie elektrische Energie, die in einem Energiespeicher, wie zum Beispiel einer Batterie oder einem Super-Cap gespeichert wird. Betriebsart und Leistung der elektrischen Maschine werden mittels des Wechselrichters eingestellt.

Da bei Hybridkraftfahrzeugen verhältnismäßig hohe Ströme und Spannungen bereitgestellt werden müssen, um die elektrische Maschine motorisch zum Antreiben des Kraftfahrzeugs verwenden zu können, werden zum Schutz des elektrischen Netzwerks und der an dem elektrischen Netzwerk angeschlossenen Komponenten Betriebsparameter, wie z.B. die Phasenströme der elektrischen Maschine, ständig überwacht.

Bei Erkennung einer Fehlfunktion, wie z.B. eines Phasenüberstroms, wird der Pulswechselrichter in einen sicheren Zustand geschaltet, um eine mögliche Schädigung elektrischer Komponenten zu verhindern. Aus dem Stand der Technik sind im Wesentlichen zwei verschiedene Abschaltverfahren bekannt. Bei einem ersten Verfahren werden sämtliche mit einem niedrigen Potential verbundenen Schalter (Low-Side-Schalter) des Pulswechselrichters geschlossen und alle mit einem hohen Potential verbundenen Schalter (High-Side-Schalter) des Pulswechselrichters geöffnet. Diese Betriebsart wird auch als Kurzschluss-Modus bezeichnet. Bei einem anderen Abschaltverfahren werden sämtliche Schalter des Pulswechselrichters geöffnet. Dies wird auch als Freischalt-Modus bezeichnet.

Ein aus der DE 10 2006 003 254 A1 bekanntes Verfahren zum Abschalten einer elektrischen Maschine mit Pulswechselrichter im Falle einer Störung sieht vor, unerwünschte Nebeneffekte beim Abschalten der elektrischen Maschine dadurch zu minimieren und den regulären Maschinenbetrieb zu maximieren, dass die elektrische Maschine zunächst in einen Freischalt-Betrieb, in dem sämtliche Schalter des Pulswechselrichters geöffnet sind, und nachfolgend in einen Kurzschluss-Modus geschaltet wird, in dem die mit dem hohen Potenzial verbundenen Schalter offen und die mit dem niedrigen Potenzial verbundenen Schalter geschlossen sind.

Aus der DE 10 2007 020 509 A1 ist ein Verfahren zur Fehlerbehandlung bei elektrischen Maschinen eines Hybridantriebs bekannt, bei welchem zunächst erfasst wird, ob mindestens ein Betriebsparameter der elektrischen Maschine über einem zugeordneten Betriebsparameter-Grenzwert liegt. Wird dabei erfasst, dass mindestens ein Betriebsparameter über dem zugeordneten Grenzwert liegt, wird ein Versorgungsanschluss der elektrischen Maschine für ein dem Betriebsparameter zugeordnetes Zeitintervall freigeschaltet und der Versorgungsanschluss nach Ablauf des Zeitintervalls auf Masse kurzgeschlossen.

Die Druckschrift EP 1 050 425 A2 offenbart ein Fehlererfassungssystem in einem Antriebssystem für Hybridfahrzeuge, das das Auftreten eines Fehlers erkennt, der die Zuführung eines Stroms in eine Phase eines Elektromotors für den Antrieb behindert. Die Druckschrift JP 2006129567 A offenbart ein Batteriespannungserfassungssystem, welches die Differenz zwischen einer Batteriespannung und dem Eingang eines Inverters erfasst und Abweichungen von einem Schwellwert ermittelt. Die Druckschrift US 2007/0093359 A1 offenbart eine Schutzsteuereinrichtung, die einen Gatesignalunterbrechungsschalter zum Schutz von Leistungsschaltern schaltet und ein Schaltsignal einer Hybridsteuereinrichtung übersteuert. Die Druckschrift US 2009/0251831 A1 offenbart ein Verfahren zum Betrieb eines Hybridfahrzeugs im Notlaufmodus, bei dem beim Ausfall einer Phase die anderen Phasenschaltgesteuert getaktet werden. Offenbarung der Erfindung

Das erfindungsgemäße Verfahren zur Fehlererkennung bei einer durch einen Wechselrichter angesteuerten elektrischen Maschine in einem Kraftfahrzeug sieht gemäß Anspruch 1 vor, dass die Phasenströme der elektrischen Maschine ermittelt werden und ein Fehler erkannt wird, wenn zumindest einer der Phasenströme oder eine daraus abgeleitete Größe einen vorgegebenen oberen Schwellwert überschreitet. Erfindungsgemäß wird dabei der obere Schwellwert in Abhängigkeit von Betriebsparametern der elektrischen Maschine und/oder des Wechselrichters festgelegt. Vorteilhaft werden alle Phasenströme der elektrischen Maschine messtechnisch ermittelt. Alternativ dazu können die Phasenströme aber auch teilweise rechnerisch ermittelt werden. Dazu wird erfindungsgemäß ein Steuersignal an einen Basis-Anschluss eines ersten Transistors angelegt wird, dessen Kollektor-Anschluss über einen Pull-up-Widerstand mit einem Gate-Anschluss eines zweiten Transistors verbunden ist, welchem ein Spannungsteiler nachgeschaltet ist, der durch eine Reihenschaltung dreier Widerstände gebildet wird. Ein Drain-Anschluss des zweiten Transistors ist mit einem ersten Mittelabgriff zwischen dem ersten Widerstand und dem zweiten Widerstand des Spannungsteilers verbunden ist, und an dem ersten Mittelabgriff wird der obere Schwellwert für eine zum Phasenstrom korrespondierende Spannung abgenommen.

Die Veränderung des oberen Schwellwertes in Abhängigkeit von Betriebsparametern des Kraftfahrzeuges erlaubt es einerseits, den Eigenschutz des Wechselrichters, insbesondere der Leistungsbauelemente - häufig auch als Leistungshalbleiter bezeichnet - des Wechselrichters zu verbessern. Andererseits können die durch die Leistungsbauelemente des Wechselrichters definierten Betriebsgrenzen des Wechselrichters situationsspezifisch erweitert werden. Des Weiteren erlaubt es die Erfindung, den maximal auftretenden Phasenstrom betriebspunktabhängig zu begrenzen. Da der Phasenstrom direkten Einfluss auf die drehmomentbildenden Größen der elektrischen Maschine hat, kann auf diese Weise auch die Betriebssicherheit des Kraftfahrzeuges erhöht werden.

Gemäß einer Ausführungsform der Erfindung wird ein Fehler auch diagnostiziert, wenn zumindest eine aus den Phasenströmen abgeleitete Größe einen vorgegebenen unteren Schwellwert unterschreitet. Dabei wird auch der untere Schwellwert in Abhängigkeit von Betriebsparametern des Kraftfahrzeuges, insbesondere der elektrischen Maschine und/oder des Wechselrichters, festgelegt. Alternativ zum direkten Vergleich der Phasenströme mit Stromschwellwerten ist es auch möglich, die Phasenströme zunächst in eine korrespondierende andere Größe, wie z.B. eine Spannung, umzusetzen und anschließend die korrespondierenden Spannungen mit einem Spannungsschwellwert zu vergleichen. Dabei können die Phasenströme $I_U$, $I_V$ und $I_W$ beispielsweise auf korrespondierende Spannungswerte in einem Spannungsintervall von 0 V bis 5 V abgebildet werden. Für den motorischen Betrieb der elektrischen Maschine 1 kann dann der Spannungsschwellwert beispielsweise derart festgelegt werden, dass er exakt in der Mitte des Spannungsintervalls, also bei 2,5 V liegt. Damit ergibt sich aber für den generatorischen Betrieb der elektrischen Maschine neben einem oberen Schwellwert für eine positive Halbwelle des Phasenstromes auch ein betragsmäßig unterschiedlicher unterer Schwellwert für eine negative Halbwelle des Phasenstromes. Um die oben genannten Vorteile auch in diesem Fall vollumfänglich zu nutzen, ist es sinnvoll, auch den unteren Schwellwert betriebspunktabhängig festzulegen.

Eine weitere Ausführungsform der Erfindung sieht vor, dass der obere und/oder untere Schwellwert aus einer Menge abgespeicherter Schwellwerte ausgewählt wird. Das Abspeichern mehrerer vorgegebener Schwellwerte und die betriebspunktabhängige Auswahl eines jeweils aktuell gültigen Schwellwertes stellt eine besonders einfache und mit geringem schaltungstechnischen und programmiertechnischen Aufwand verbundene Realisierung dar.

Gemäß einer weiteren Ausführungsform der Erfindung wird der obere und/oder untere Schwellwert in Abhängigkeit eines Betriebszustandes der elektrischen Maschine festgelegt.

Während des Betriebes des Wechselrichters in den Leistungsgrenzbereichen gibt es ohne Berücksichtigung von Lebensdauereffekten im Wesentlichen die folgenden begrenzenden Faktoren:

- eine maximal zulässige Überspannung $U_{schalt}$ beim Schalten eines Leistungsschaltelementes des Wechselrichters - im Folgenden als Schaltüberspannung bezeichnet,
- ein maximaler Phasenstrom, welcher zu einer Entmagnetisierung der Permanentmagnete der elektrischen Maschine führt, sowie
- die thermischen Bedingungen des Wechselrichters selbst, welche unmittelbar mit den Phasenströmen korrelieren.

Die an einem Leistungsschaltelement in einem Wechselrichter anliegende Spannung $U_{lh}$ ergibt sich jeweils aus der Summe einer aktuellen Zwischenkreisspannung $U_{zk}$, und der Schaltüberspannung $U_{schalt}$. Um eine Schädigung des Leistungsschaltelementes oder Leistungshalbleiters zu vermeiden, muss die an dem Leistungsschaltelement anliegende Spannung $U_{lh}$ stets kleiner als eine Maximalspannung $U_{max}$ sein. Es gilt somit

$$U_{zk} + U_{schalt} = U_{lh} < U_{\max} \qquad (1)$$

Des Weiteren sind die an den Leistungsschaltelementen des Wechselrichters auftretenden Schaltüberspannungen $U_{schalt}$ direkt proportional zu den jeweils geschalteten Phasenströmen $I_{phase}$, so dass gilt:

$$U_{schalt} \sim I_{phase} \qquad (2)$$

Somit wird die die an dem Leistungsschaltelement anliegende Spannung $U_{lh}$ im Wesentlichen durch die Zwischenkreisspannung $U_{zk}$ sowie den Phasenstrom $I_{phase}$ bestimmt. Aufgrund des Innenwiderstandes der Hochvoltbatterie und deren Zuleitungen liegt jedoch an den Leistungsschaltelementen des Wechselrichters Im generatorischen Betrieb der elektrischen Maschine eine deutlich höhere Zwischenkreisspannung an als im motorischen Betrieb. Folglich kann im motorischen Betrieb aber ein deutlich höherer Phasenstrom zugelassen werden als im generatorischen Betrieb der elektrischen Maschine. Um den Betriebsbereich des Wechselrichters möglichst optimal auszunutzen, ist es daher sinnvoll, den oberen und/oder unteren Schwellwert in Abhängigkeit des Betriebszustandes der elektrischen Maschine festzulegen, das heißt zumindest für den generatorischen und den motorischen Betrieb unterschiedliche Schwellwerte vorzusehen.

Eine besonders einfache Möglichkeit, den Betriebszustand der elektrischen Maschine zu berücksichtigen, besteht in der entsprechenden Berücksichtigung der Zwischenkreisspannung $U_{zk}$. Demzufolge sieht eine Ausführungsform der Erfindung vor, den oberen und/oder unteren Schwellwert in Abhängigkeit von der Zwischenkreisspannung $U_{zk}$ festzulegen. Dabei wird insbesondere mit zunehmender Zwischenkreisspannung $U_{zk}$ der obere Schwellwert abgesenkt und ggf. der untere Schwellwert angehoben. Dementsprechend wird bei abnehmender Zwischenkreisspannung $U_{zk}$ der obere Schwellwert angehoben und ggf. der untere Schwellwert abgesenkt.

Gemäß einer weiteren Ausführungsform der Erfindung wird der obere und/oder untere Schwellwert in Abhängigkeit von einer Temperatur, insbesondere der Sperrschichttemperatur, eines elektrisch durchbruchfähigen Leistungsbauelementes, insbesondere eines Leistungsschaltelementes, des Wechselrichters festgelegt.

Da bei durchbruchfähigen Leistungsbauelementen, wie sie beispielsweise die Leistungsschaltelemente oder auch Dioden in einem Wechselrichter darstellen, die Sperrspannungen der Bauelemente von der Temperatur des jeweiligen Bauelementes abhängen, ist es vorteilhaft, den zulässigen Phasenstrom in Abhängigkeit von der Temperatur an diesen Bauelementen festzulegen. Dabei wird insbesondere mit zunehmender Bauteiltemperatur der obere Schwellwert abgesenkt und ggf. der untere Schwellwert angehoben. Dementsprechend wird bei abnehmender Bauteiltemperatur der obere Schwellwert angehoben und ggf. der untere Schwellwert abgesenkt. Von besonderer Bedeutung ist dabei die Sperrschichttemperatur oder Junction-Temperatur der Leistungsschaltelemente.

Gemäß einer Ausführungsform der Erfindung wird der obere und/oder untere Schwellwert in Abhängigkeit von Höhen der Phasenströme und/oder in Abhängigkeit von Fließdauern der Phasenströme festgelegt.

Sowohl die Höhe der Phasenströme als auch deren Fließdauer, das heißt die Zeitspanne, über welche ein Phasenstrom fließt, beeinflussen die Verlustleistung an den Leistungsschaltelementen des Wechselrichters. Um den Betriebsbereich des Wechselrichters einerseits vollständig auszunutzen, andererseits aber eine Schädigung der Leistungsbauelemente sicher zu verhindern, ist es daher sinnvoll Grenzwerte für die Phasenströme in Abhängigkeit von der Höhe und der Fließdauer der Phasenströme festzulegen. Dabei wird insbesondere mit zunehmender Stromhöhe und/oder zunehmender Fließdauer der obere Schwellwert abgesenkt und ggf. der untere Schwellwert angehoben. Dementsprechend wird mit abnehmender Stromhöhe und/oder abnehmender Fließdauer der obere Schwellwert angehoben und ggf. der untere Schwellwert abgesenkt.

Des Weiteren können der obere und/oder untere Schwellwert auch in Abhängigkeit einer Kollektor-Emitterspannung oder einer Source-Drainspannung eines Leistungsschaltelementes des Wechselrichters, in Abhängigkeit einer Temperatur eines Kühlkörpers eines Leistungsbauelementes des Wechselrichters, insbesondere eines Leistungsschaltelementes, oder auch in Abhängigkeit eines Kollektorstromes oder eines Sourcestromes eines Leistungsschaltelementes des Wechselrichters festgelegt werden. All diese Größen beeinflussen die thermischen Bedingungen an den durchbruchfähigen Leistungsbauelementen des Wechselrichters und haben damit Einfluss auf die unter den jeweiligen Bedingungen noch zulässigen Phasenströme. Somit kann auch durch Berücksichtigung dieser Betriebsparameter die Eigensicherheit des Wechselrichters erhöht werden bei gleichzeitiger betriebspunktabhängiger Ausreizung der maximal möglichen Phasenströme.

Die Erfindung schafft außerdem eine Vorrichtung gemäß Anspruch 1 zur Überwachung eines Betriebs einer durch einen Wechselrichter angesteuerten elektrischen Maschine in einem Kraftfahrzeug mit einer Phasenstromüberwachung zum Vergleichen von Phasenströmen oder daraus abgeleiteten Größen der elektrischen Maschine mit einem vorgegebenen oberen Schwellwert und einer Steuereinheit zum Festlegen des oberen Schwellwertes in Abhängigkeit von Betriebsparametern der elektrischen Maschine und/oder des Wechselrichters. Erfindungsgemäß umfasst die Phasenstromüberwachung einen ersten Transistor, einen zweiten Transistor, einen Pull-up-Widerstand und einen dem zweiten Transistor nachgeschalteten Spannungsteiler, der durch eine Reihenschaltung dreier Widerstände gebildet wird. Dabei weist der erste Transistor einen Kollektor-Anschluss auf, der über einen Pull-up-Widerstand mit einem Gate-Anschluss eines zweiten Transistors verbunden ist. Ein Drain-Anschluss des zweiten Transistors ist mit einem ersten Mittelabgriff zwischen dem ersten Widerstand und dem zweiten Widerstand des Spannungsteilers verbunden. Die Steuereinheit ist dazu ausgelegt, ein Steuersignal an einen Basis-Anschluss des ersten Transistors anzulegen, wodurch an dem ersten Mittelabgriff der obere Schwellwert für eine zum Phasenstrom korrespondierende Spannung abnehmbar ist.

Die Steuereinheit kann dabei als eigenständige Einheit, z.B. in Form eines Mikrocontrollers, oder auch in Form einer Hardware-Schaltung realisiert sein.

Die Phasenstromüberwachung kann eine aus den Phasenströmen abgeleitete Größe auch mit einem unteren Schwellwert vergleichen und die Steuereinheit den unteren Schwellwert in Abhängigkeit von Betriebsparametern des Kraftfahrzeuges, insbesondere der elektrischen Maschine und/oder des Wechselrichters, festlegen. Grundsätzlich ist die erfindungsgemäße Vorrichtung derart ausgestaltet, dass sie das erfindungsgemäße Verfahren inklusive aller Ausführungsformen ausführen kann.

Weitere Merkmale und Vorteile von Ausführungsformen der Erfindung ergeben sich aus der nachfolgenden Beschreibung mit Bezug auf die beigefügten Figuren.

Kurze Beschreibung der Figuren

Es zeigen:

Figur 1     eine schematische Darstellung einer dreiphasigen durch einen Wechselrichter angesteuerten elektrischen Maschine,

Figur 2     eine schematische Darstellung der Spannungskomponenten an einem Leistungsschaltelement eines Wechselrichters,

Figur 3     ein schematisches Blockschaltbild einer erfindungsgemäßen Vorrichtung zur Überwachung eines Betriebs einer durch einen Wechselrichter angesteuerten elektrischen Maschine,

Figur 4     eine schematische Darstellung einer Schaltungsanordnung in einer Phasenstromüberwachung zur Festlegung eines unteren und oberen Spannungsschwellwertes gemäß einer Ausführungsform der Erfindung, und

Figur 5     eine schematische Darstellung der mit Hilfe einer Schaltungsanordnung gemäß Figur 4 festgelegten Spannungsschwellwerte.

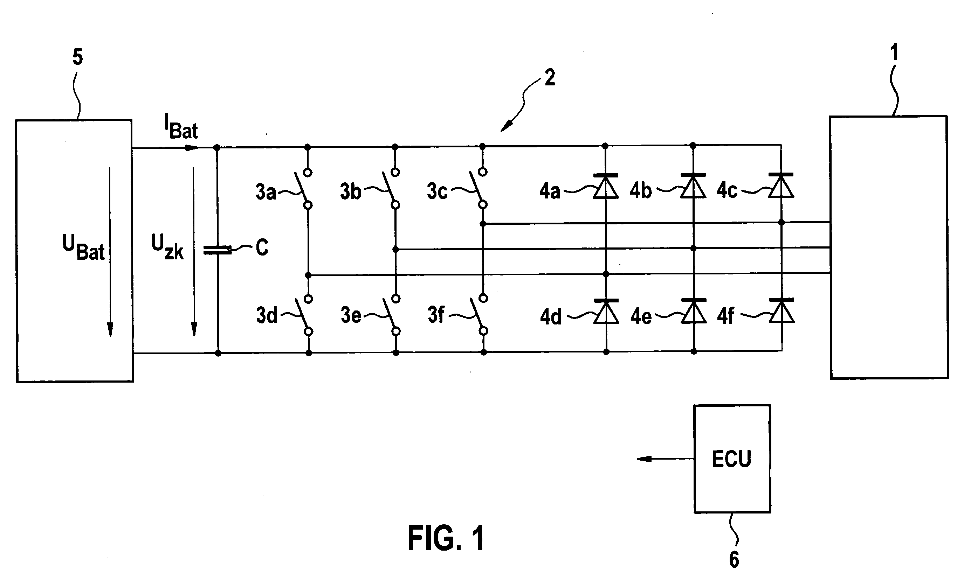

Fig. 1 zeigt eine schematische Darstellung einer elektrischen Maschine 1 mit einem daran angeschlossenen Wechselrichter in Form eines Pulswechselrichters 2. Der Pulswechselrichter 2 umfasst mehrere Leistungsbauelemente - häufig auch als Leistungshalbleiter bezeichnet - in Form von Leistungsschaltelementen 3a-3f, welche mit einzelnen Phasen U,V,W der elektrischen Maschine 1 verbunden sind und die Phasen U,V,W entweder gegen ein hohes Versorgungspotential (Batteriespannung $U_{Bat+}$) oder ein niedriges Versorgungspotential ($U_{Bat-}$) schalten. Die mit dem hohen Versorgungspotential $U_{Bat+}$ verbundenen Leistungsschaltelemente 3a-3c werden dabei auch als "High-Side-Schalter" und die mit dem niedrigen Versorgungspotential $U_{Bat-}$ verbundenen Leistungsschaltelemente 3d-3f als "Low-Side-Schalter" bezeichnet. Der Pulswechselrichter 2 umfasst ferner weitere Leistungsbauelemente in Form von Freilaufdioden 4a-4f, die im dargestellten Ausführungsbeispiel in Form einer sechspulsigen Gleichrichter-Brückenschaltung angeordnet sind. Dabei ist jeweils eine Diode 4a-4f parallel zu einem der Leistungsschaltelemente 3a-3f angeordnet. Die Leistungsschaltelemente können beispielsweise als IGBTs (Insolated Gate Bipolar Transistors) oder als MOSFETs (Metal Oxide Semiconductor Field-Effect Transistors) ausgeführt sein.

Der Pulswechselrichter 2 bestimmt Leistung und Betriebsart der elektrischen Maschine 1 und wird von einem Steuergerät 6 entsprechend angesteuert. Die elektrische Maschine 1 kann somit wahlweise im Motor- oder Generatorbetrieb betrieben werden. Im Motorbetrieb erzeugt sie ein zusätzliches Antriebsmoment, das den Verbrennungsmotor z.B. in einer Beschleunigungsphase unterstützt. Im Generatorbetrieb wird dagegen mechanische Energie in elektrische Energie gewandelt und in einem Energiespeicher, hier einer Batterie 5 gespeichert. Die Batterie 5 ist mit einem nicht dargestellten Energieversorgungsnetz in einem Kraftfahrzeug verbunden, wobei die Batterie als Hochvoltbatterie und das Energieversorgungsnetz zum Beispiel als Hochvolt-Traktionsnetz in einem Hybridfahrzeug ausgeführt sein kann.

Parallel zum Pulswechselrichter 2 ist ein so genannter Zwischenkreis-Kondensator C angeordnet, der im Wesentlichen zur Stabilisierung der BatterieSpannung $U_{Bat}$ dient und an welchem eine Zwischenkreisspannung $U_{zk}$ anliegt.

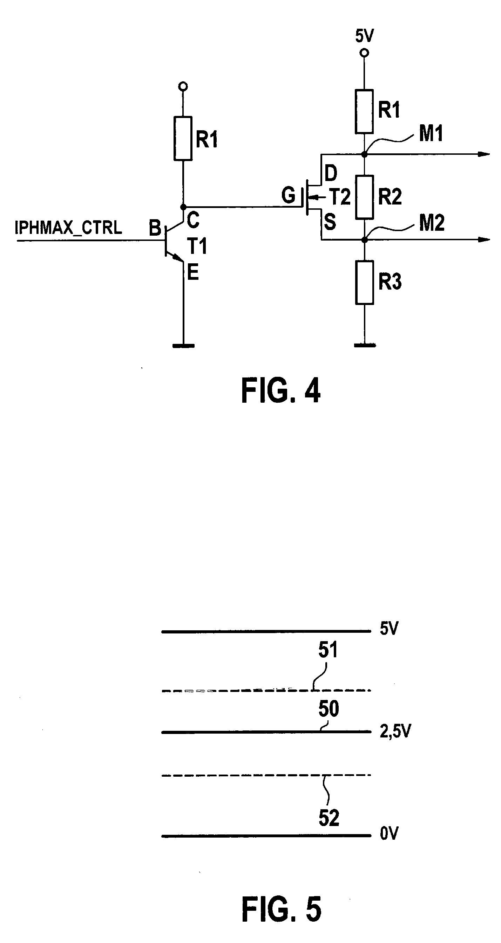

Phasenströme $I_U$, $I_V$ und $I_W$ in den Phasen I, U bzw. W der elektrischen Maschine 1 werden mit Hilfe von Stromsensoren (vgl. Figur 4) ermittelt. Vorteilhaft werden alle Phasenströme $I_U$, $I_V$ und $I_W$ messtechnisch ermittelt. Alternativ ist es aber auch möglich nur einen Teil der Phasenströme über Stromsensoren zu messen und die übrigen Phasenströme rechnerisch zu ermitteln.

Zum Eigenschutz der elektrischen Maschine 1 sowie des Pulswechselrichters 2 ist es erforderlich, die Phasenströme $I_U$, $I_V$ und $I_W$ zu überwachen und den Pulswechselrichter 2 in einen sicheren Betriebszustand zu überführen, wenn zumindest einer der Phasenströme $I_U$, $I_V$ oder $I_W$ einen vorgegeben Schwellwert - häufig auch als Überstromschwelle bezeichnet - überschreitet. Bei Erkennung einer Fehlfunktion in Form eines zu hohen Stromes in mindestens einer der Phasen U, V oder W schaltet der Pulswechselrichter 2, getriggert vom Steuergerät 6, automatisch in einen Freischalt- oder Kurzschluss-Modus.

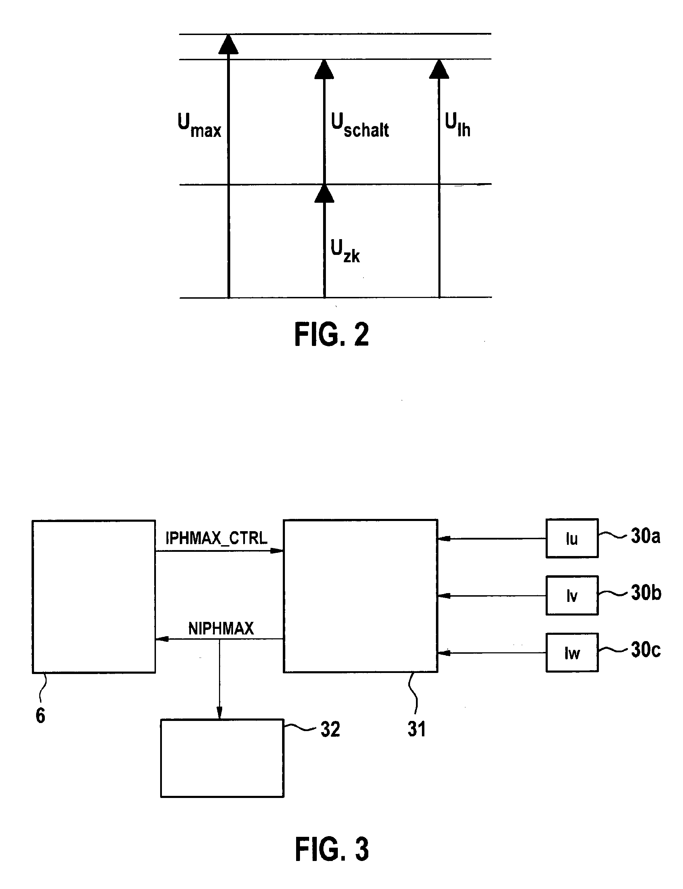

Innerhalb des Pulswechselrichters 2 sind die durchbruchfähigen Leistungsbauelemente und dabei insbesondere die Leistungsschaltelemente 3a-3f besonders spannungsempfindlich. Eine an einem Leistungsschaltelement 3 auftretende Spannung $U_{lh}$ ergibt sich als Summe einer Zwischenkreisspannung $U_{zk}$ am Zwischenkreiskondensator C und einer Schaltüberspannung $U_{schalt}$ (vgl. Figur 2). Um eine dauerhafte Schädigung der Leistungsschaltelemente zu vermeiden, muss die an dem Leistungsschaltelement anliegende Spannung $U_{lh}$ stets kleiner als eine Maximalspannung $U_{max}$ sein. Die Schaltüberspannung $U_{schalt}$ ist unmittelbar abhängig von dem jeweiligen Phasenstrom. Werden die Phasenströme $I_U$, $I_V$ und $I_W$ mit einem einzigen fest vorgegebenen Überstromschwellwert verglichen, muss dieser anhand der größtmöglichen Zwischenkreisspannung $U_{zk}$ und der sich daraus ergebenden maximal zulässigen Schaltüberspannung $U_{schalt}$ festgelegt werden. Auf ein Absinken der Zwischenkreisspannung $U_{zk}$ kann dann aber nicht mehr reagiert werden, so dass der Betriebsbereich des Pulswechselrichters 2 in derartigen Betriebssituationen nicht optimal ausgenutzt wird.

Erfindungsgemäß wird ein oberer Schwellwert für die Phasenströme $I_U$, $I_V$ und $I_W$ in Abhängigkeit von Betriebsparametern des Kraftfahrzeuges, insbesondere der elektrischen Maschine 1 und/oder des Pulswechselrichters 2, festgelegt. Auf diese Weise ist es möglich, den maximal zulässigen Phasenstrom, also den maximal möglichen, nicht zur Zerstörung der Leistungsschaltelemente 3 führenden Phasenstrom, betriebspunktabhängig festzulegen und damit den Betriebsbereich des Pulswechselrichters 2 deutlich auszuweiten.

Aufgrund des Innenwiderstandes der Batterie 5 und deren Zuleitungen ergibt sich im generatorischen Betrieb der elektrischen Maschine 1 eine deutlich höhere Zwischenkreisspannung $U_{zk}$ als im motorischen Betrieb. Folglich können im motorischen Betrieb deutlich größere Schaltüberspannungen $U_{schalt}$ und damit deutlich höherer Phasenströme $I_U$, $I_V$ und $I_W$ zugelassen werden als im generatorischen Betrieb. Wird der obere Grenzwert des Phasenstromes in Abhängigkeit der Betriebsart der elektrischen Maschine 1 oder in Abhängigkeit der Zwischenkreisspannung $U_{zk}$, welche unter anderem auch die Betriebsart charakterisiert, festgelegt, so kann der Betriebsbereich des Pulswechselrichters 2 insbesondere im motorischen Betrieb der elektrischen Maschine 1 erheblich ausgeweitet werden.

Figur 3 zeigt ein schematisches Blockschaltbild einer erfindungsgemäßen Vorrichtung zur Überwachung eines Betriebs einer durch einen Wechselrichter angesteuerten elektrischen Maschine. Zwischen das Steuergerät 6, welches den Pulswechselrichter 2 ansteuert, und Stromsensoren 30a-30c, welche die Phasenströme $I_U$, $I_V$ bzw. $I_W$ erfassen, ist eine Phasenstromüberwachung 31 geschaltet. Durch die Phasenstromüberwachung 31 werden die Phasenströme $I_U$, $I_V$ und $I_W$, beispielsweise mit Hilfe von Komparatoren, mit einem vorgegebenen oberen Schwellwert verglichen. Überschreitet zumindest einer der Phasenströme $I_U$, $I_V$ oder $I_W$ den oberen Schwellwert, so wird ein Fehler erkannt und in Form eines Signals NIPHMAX an die Steuereinheit 6 sowie eine Fehlerlogik 32 gemeldet. Die Fehlerlogik ist in Figur 3 als eigenständige Einheit dargestellt, kann aber auch in die Steuereinheit 6 integriert sein. Durch die Fehlerlogik 32 und/oder die Steuereinheit 6 wird der Pulswechselrichter 2 daraufhin in einen sicheren Betriebszustand in Form eines Freilaufes oder eines Kurzschlusses gebracht. Erfindungsgemäß überträgt die Steuereinheit 6 an die Phasenstromüberwachung 31 ein Steuersignal IPHMAX-CTRL, mit Hilfe dessen der obere Schwellwert festgelegt wird. Vorteilhaft sind dabei in der Phasenstromüberwachung 31 mehrere obere Schwellwerte gespeichert, aus denen in Abhängigkeit von dem Steuersignal IPHMAX-CTRL ein aktuell gültiger Schwellwert ausgewählt wird. Auf diese Weise kann der obere Schwellwert betriebspunktabhängig festgelegt werden.

Sind nur zwei unterschiedliche obere Schwellwerte, z.B. für den generatorischen bzw. motorischen Betrieb der elektrischen Maschine 1 vorgesehen, so kann das Steuersignal IPHMAX-CTRL zum Beispiel in Form eines einfachen logischen Signals, welches die Pegel "High" oder "Low" annehmen kann, realisiert sein. Dabei führt beispielsweise die Übertragung eines Low-Pegels zur Einstellung eines ersten oberen Schwellwertes für den motorischen Betrieb und die Übertragung eines High-Pegels zur Einstellung eines zweiten oberen Schwellwertes für den generatorischen Betrieb. Sind mehr als zwei obere Schwellwerte vorgesehen, so können mehrere derartige Steuersignale IPHMAX-CTRL vorgesehen sein. Alternativ dazu kann das Steuersignal aber auch in Form eines pulsweitenmodulierten Signals oder eines Analogsignals realisiert sein.

Alternativ zum direkten Vergleich der Phasenströme $I_U$, $I_V$ und $I_W$ mit Stromschwellwerten ist es auch möglich, die Phasenströme $I_U$, $I_V$ und $I_W$ zunächst in eine korrespondierende andere Größe, wie z.B. eine Spannung, umzusetzen und anschließend die korrespondierenden Spannungen mit einem Spannungsschwellwert zu vergleichen. Dabei können die Phasenströme $I_U$, $I_V$ und $I_W$ beispielsweise auf korrespondierende Spannungswerte in einem Spannungsintervall von 0 V und 5 V abgebildet werden. Für den motorischen Betrieb der elektrischen Maschine 1 kann dann der Spannungsschwellwert beispielsweise derart festgelegt werden, dass er exakt in der Mitte des Spannungsintervalls, also bei 2,5 V liegt. Somit ergibt sich aber für den generatorischen Betrieb der elektrischen Maschine 1 neben einem oberen Schwellwert für eine positive Halbwelle des Phasenstromes auch ein betragsmäßig abweichender unterer Schwellwert für eine negative Halbwelle des Phasenstromes. Gemäß einer Ausführungsform der Erfindung wird auch dieser untere Schwellwert betriebspunktabhängig festgelegt.

Figur 4 zeigt eine schematische Darstellung einer Schaltungsanordnung in einer Phasenstromüberwachung 31 zur Festlegung eines unteren und oberen Spannungsschwellwertes gemäß der genannten Ausführungsform der Erfindung. Dabei wird das Steuersignal IPHMAX-CTRL an einen Basis-Anschluss eines ersten Transistors T1 angelegt. Ein Kollektor-Anschluss des ersten Transistors T1 ist über einen Pull-up-Widerstand R1 mit einem Gate-Anschluss eines zweiten Transistors T2 verbunden, welcher in der dargestellten Ausführungsform als Feldeffekttransistors T2 ausgeführt ist. Dem zweiten Transistor T2 nachgeschaltet ist ein Spannungsteiler, welcher durch eine Reihenschaltung dreier Widerstände R2, R3 und R4 gebildet wird. Dabei ist ein Drain-Anschluss des zweiten Transistors T2 mit einem ersten Mittelabgriff M1 zwischen dem ersten Widerstand R2 und dem zweiten Widerstand R3 des Spannungsteilers und ein Source-Anschluss des zweiten Transistors T2 mit einem zweiten Mittelabgriff M2 zwischen dem zweiten Widerstand

R3 und dem dritten Widerstand R4 des Spannungsteilers verbunden. An dem ersten Mittelabgriff M1 wird der obere Schwellwert für eine zum Phasenstrom korrespondierende Spannung abgenommen. Am zweiten Mittelabgriff M2 wird der untere Schwellwert für eine zum Phasenstrom korrespondierende Spannung abgenommen.

Sobald das Steuersignal IPHMAX-CTRL im Falle eines motorischen Betriebes der elektrischen Maschine 1 einen Wert von 0 V annimmt (Low-Pegel) wird über den ersten Transistor T1 und den Pull-up-Widerstand R1 der zweite Transistor T2 eingeschaltet. Hierdurch stellt sich am Spannungsteiler ein Spannungsverhältnis von 1:1 ein, so dass der obere und der untere Schwellwert für die positive bzw. negative Halbwelle des Phasenstromes auf einem Wert von z.B. 2,5 V zusammenfallen. Weist das Steuersignal IPHMAX-CTRL einen High-Pegel auf, so ist der zweite Transistor T2 geschlossen, so dass sich für den oberen und unteren Schwellwert unterschiedliche Spannungswerte ergeben. Im Falle einer positiven Halbwelle darf dabei der obere Schwellwert nicht überschritten und im Falle einer negativen Halbwelle der untere Schwellwert nicht unterschritten werden. Die in Figur 4 dargestellte Schaltung stellt damit eine besonders einfache und kostengünstige Realisierung einer Phasenstromüberwachung 31 dar, welche dazu geeignet ist, obere und untere Schwellwerte für die Phasenströme einzustellen, wenn die Phasenströme $I_U$, $I_V$ und $I_W$ vor dem Vergleich mit den Schwellwerten in korrespondierende Spannungen gewandelt wurden.

In Figur 5 sind schematisch die mit Hilfe der Schaltungsanordnung gemäß Figur 4 festgelegten Spannungsschwellwerte dargestellt. Dabei ist der obere Schwellwert für den motorischen Betrieb, der gemäß der gewählten Ausführungsform mit dem unteren Schwellwert für den motorischen Betrieb zusammenfällt mit dem Bezugszeichen 50 gekennzeichnet. Der obere und untere Schwellwert für den generatorischen Betrieb sind als gestrichelte Linien 51 bzw. 52 dargestellt. Die Schwellwerte 51 und 52 liegen dabei symmetrisch um den Mittelwert von 2,5 V und charakterisieren einen Phasenstrom von +m Ampere für eine positive Halbwelle bzw. -m Volt für eine negative Halbwelle des Phasenstromes.

Neben der Zwischenkreisspannung $U_{zk}$ und der Betriebsart der elektrischen Maschine 1 beeinflussen weitere Faktoren, wie z.B. die Sperrschichttemperaturen der Leistungsschaltelemente 3a-3f, die Höhen und die Fließdauern der Phasenströme $I_U$, $I_V$ und $I_W$, die Kollektor-Emitterspannungen oder Source-Drainspannungen der Leistungsschaltelemente 3a-3f, die Temperaturen an Kühlkörpern der Leistungsschaltelemente 3a-3f oder auch Kollektorströme oder Sourceströme der Leistungsschaltelemente 3a-3f die Verlustleistungen und/oder thermischen Verhältnisse an den Leistungsschaltelementen 3a-3f und damit die maximal zulässigen Phasenströme $I_U$, $I_V$ und $I_W$. Um den Betriebsbereich des Pulswechselrichters 2 möglichst optimal auszunutzen ist es daher vorteilhaft, auch diese Betriebsparameter bei der Festlegung des oberen Schwellwertes und ggf. auch des unteren Schwellwertes zu berücksichtigen.

Die Erfindung für anhand einer dreiphasigen elektrischen Maschine erläutert, ist aber selbstverständlich auch für elektrische Maschinen mit mehr oder weniger als drei Phasen anwendbar.

**Patentansprüche**

1. Verfahren zur Fehlererkennung bei einer durch einen Wechselrichter (2) angesteuerten elektrischen Maschine (1) in einem Kraftfahrzeug, bei dem die Phasenströme ($I_U$, $I_V$, $I_W$) der elektrischen Maschine (1) ermittelt werden und ein Fehler erkannt wird, wenn zumindest einer der Phasenströme ($I_U$, $I_V$, $I_W$) oder eine daraus abgeleitete Größe einen vorgegebenen oberen Schwellwert überschreitet, wobei der obere Schwellwert in Abhängigkeit von Betriebsparametern der elektrischen Maschine (1) und/oder des Wechselrichters (2), festgelegt wird, **dadurch gekennzeichnet, dass**
   ein Steuersignal (IPHMAX-CTRL) an einen Basis-Anschluss eines ersten Transistors (T1) angelegt wird, dessen Kollektor-Anschluss über einen Pull-up-Widerstand (R1) mit einem Gate-Anschluss eines zweiten Transistors (T2) verbunden ist, welchem ein Spannungsteiler nachgeschaltet ist, der durch eine Reihenschaltung dreier Widerstände (R2, R3, R4) gebildet wird, wobei ein Drain-Anschluss des zweiten Transistors (T2) mit einem ersten Mittelabgriff (M1) zwischen dem ersten Widerstand (R2) und dem zweiten Widerstand (R3) des Spannungsteilers verbunden ist, und wobei an dem ersten Mittelabgriff (M1) der obere Schwellwert für eine zum Phasenstrom korrespondierende Spannung abgenommen wird.

2. Verfahren nach Anspruch 1, wobei ein Fehler erkannt wird, wenn zumindest eine aus den Phasenströmen ($I_U$, $I_V$, $I_W$) abgeleitete Größe einen vorgegebenen unteren Schwellwert unterschreitet, wobei der untere Schwellwert in Abhängigkeit von Betriebsparametern der elektrischen Maschine (1) und/oder des Wechselrichters (2), festgelegt wird, wobei ein Source-Anschluss des zweiten Transistors (T2) mit einem zweiten Mittelabgriff (M2) zwischen dem zweiten Widerstand (R3) und dem dritten Widerstand (R4) des Spannungsteilers verbunden ist, und am zweiten Mittelabgriff (M2) der untere Schwellwert für eine zum Phasenstrom korrespondierende Spannung abgenommen wird.

3. Verfahren nach einem der Ansprüche 1 oder 2, wobei der obere und/oder untere Schwellwert aus einer Menge abgespeicherter Schwellwerte ausgewählt werden.

4. Verfahren nach einem der vorhergehenden Ansprüche, wobei der obere und/oder untere Schwellwert in Abhängigkeit eines Betriebszustandes der elektrischen Maschine (1) festgelegt werden.

5. Verfahren nach einem der Ansprüche 1 bis 3, wobei der obere und/oder untere Schwellwert in Abhängigkeit von einer Zwischenkreisspannung ($U_{zk}$) festgelegt werden.

6. Verfahren nach einem der Ansprüche 1 bis 5, wobei der obere und/oder untere Schwellwert in Abhängigkeit von einer Temperatur eines elektrisch durchbruchfähigen Leistungsschaltelementes (3) des Wechselrichters (2) festgelegt werden.

7. Verfahren nach einem der vorhergehenden Ansprüche, wobei der obere und/oder untere Schwellwert in Abhängigkeit von Höhen der Phasenströme ($I_U$, $I_V$, $I_W$) und/oder in Abhängigkeit von Fließdauern der Phasenströme ($I_U$, $I_V$, $I_W$) festgelegt werden.

8. Verfahren nach einem der vorhergehenden Ansprüche, wobei der obere und/oder untere Schwellwert in Abhängigkeit einer Kollektor-Emitterspannung oder einer Source-Drainspannung eines Leistungsschaltelementes (3) des Wechselrichters (2) festgelegt werden.

9. Verfahren nach einem der vorhergehenden Ansprüche, wobei der obere und/oder untere Schwellwert in Abhängigkeit einer Temperatur eines Kühlkörpers eines Leistungsschaltelementes (3) des Wechselrichters (2) festgelegt werden.

10. Verfahren nach einem der vorhergehenden Ansprüche, wobei der obere und/oder untere Schwellwert in Abhängigkeit eines Kollektorstromes oder eines Sourcestromes eines Leistungsschaltelementes (3) des Wechselrichters (2) festgelegt werden.

11. Vorrichtung zur Überwachung eines Betriebs einer durch einen Wechselrichter (2) angesteuerten elektrischen Maschine (1) in einem Kraftfahrzeug, mit:

- einer Phasenstromüberwachung (31) zum Vergleichen von Phasenströmen ($I_U$, $I_V$, $I_W$) oder daraus abgeleiteten Größen der elektrischen Maschine (1) mit einem vorgegebenen oberen Schwellwert; und
- einer Steuereinheit (6) zum Festlegen des oberen Schwellwertes in Abhängigkeit von Betriebsparametern der elektrischen Maschine (1) und/oder des Wechselrichters (2),
**dadurch gekennzeichnet, dass**
die Phasenstromüberwachung (31) einen ersten Transistor (T1), einen zweiten Transistor (T2), einen Pull-up-Widerstand (R1) und einen dem zweiten Transistor (T2) nachgeschalteten Spannungsteiler, der durch eine Reihenschaltung dreier Widerstände (R2, R3, R4) gebildet wird, aufweist, wobei der erste Transistor (T1) einen Kollektor-Anschluss aufweist, der über einen Pull-up-Widerstand (R1) mit einem Gate-Anschluss eines zweiten Transistors (T2) verbunden ist, und wobei ein Drain-Anschluss des zweiten Transistors (T2) mit einem ersten Mittelabgriff (M1) zwischen dem ersten Widerstand (R2) und dem zweiten Widerstand (R3) des Spannungsteilers verbunden ist,
dass die Steuereinheit (6) dazu ausgelegt ist, ein Steuersignal (IPHMAX-CTRL) an einen Basis-Anschluss des ersten Transistors (T1) anzulegen, und dass an dem ersten Mittelabgriff (M1) der obere Schwellwert für eine zum Phasenstrom korrespondierende Spannung abnehmbar ist.

12. Vorrichtung nach Anspruch 11, wobei die Phasenstromüberwachung (31) aus den Phasenströmen ($I_U$, $I_V$, $I_W$) abgeleitete Größen mit einem unteren Schwellwert vergleicht und die Steuereinheit (6) den unteren Schwellwert in Abhängigkeit von Betriebsparametern der elektrischen Maschine (1) und/oder des Wechselrichters (2) festlegt, wobei ein Source-Anschluss des zweiten Transistors (T2) mit einem zweiten Mittelabgriff (M2) zwischen dem zweiten Widerstand (R3) und dem dritten Widerstand (R4) des Spannungsteilers verbunden ist, und am zweiten Mittelabgriff (M2) der untere Schwellwert für eine zum Phasenstrom korrespondierende Spannung abnehmbar ist.

## Claims

1. Method for error detection in an electric machine (1) actuated by an inverter (2) in a motor vehicle, in which method the phase currents ($I_U$, $I_V$, $I_W$) of the electric machine (1) are determined and an error is detected if at least one of the phase currents ($I_U$, $I_V$, $I_W$) or a variable derived therefrom exceeds a predefined upper threshold value, wherein the upper threshold value is set depending on operating parameters of the electric machine (1) and/or of the inverter (2), **characterized in that**

a control signal (IPHMAX-CTRL) is applied to a base terminal of a first transistor (T1), the collector terminal of which is connected to a gate terminal of a second transistor (T2) via a pull-up resistor (R1), a potential divider which is formed from a series connection of three resistors (R2, R3, R4) being connected downstream of said second transistor, wherein a drain terminal of the second transistor (T2) is connected to a first centre tap (M1) between the first resistor (R2) and the second resistor (R3) of the potential divider, and wherein the upper threshold value for a voltage corresponding to the phase current is tapped at the first centre tap (M1).

2. Method according to Claim 1, wherein an error is detected if at least one variable derived from the phase currents ($I_U$, $I_V$, $I_W$) falls short of a predefined lower threshold value, wherein the lower threshold value is set depending on operating parameters of the electric machine (1) and/or of the inverter (2), wherein a source terminal of the second transistor (T2) is connected to a second centre tap (M2) between the second resistor (R3) and the third resistor (R4) of the potential divider, and the lower threshold value for a voltage corresponding to the phase current is tapped at the second centre tap (M2).

3. Method according to either of Claims 1 and 2, wherein the upper and/or lower threshold value is chosen from a set of stored threshold values.

4. Method according to one of the preceding claims, wherein the upper and/or lower threshold value is set depending on an operating state of the electric machine (1).

5. Method according to one of Claims 1 to 3, wherein the upper and/or lower threshold value is set depending on an intermediate-circuit voltage ($U_{zk}$).

6. Method according to one of Claims 1 to 5, wherein the upper and/or lower threshold value is set depending on a temperature of an electrical breakdown power switching element (3) of the inverter (2).

7. Method according to one of the preceding claims, wherein the upper and/or lower threshold value is set depending on amplitudes of the phase currents ($I_U$, $I_V$, Iw) and/or depending on flow durations of the phase currents ($I_U$, $I_V$, $I_W$).

8. Method according to one of the preceding claims, wherein the upper and/or lower threshold value is set depending on a collector-emitter voltage or a source-drain voltage of a power switching element (3) of the inverter (2).

9. Method according to one of the preceding claims, wherein the upper and/or lower threshold value is set depending on a temperature of a heat sink of a power switching element (3) of the inverter (2).

10. Method according to one of the preceding claims, wherein the upper and/or lower threshold value is set depending on a collector current or a source current of a power switching element (3) of the inverter (2).

11. Device for monitoring the operation of an electric machine (1) actuated by an inverter (2) in a motor vehicle, said device having:

- a phase-current monitoring means (31) for comparing phase currents ($I_U$, $I_V$, $I_W$) or variables derived therefrom of the electric machine (1) with a predefined upper threshold value; and
- a control unit (6) for setting the upper threshold value depending on operating parameters of the electric machine (1) and/or of the inverter (2),
**characterized in that**
the phase-current monitoring means (31) has a first transistor (T1), a second transistor (T2), a pull-up resistor (R1) and a potential divider which is formed from a series connection of three resistors (R2, R3, R4) and is connected downstream of the second transistor (T2), wherein the first transistor (T1) has a collector terminal which is connected to a gate terminal of a second transistor (T2) via a pull-up resistor (R1), and wherein a drain terminal of the second transistor (T2) is connected to a first centre tap (M1) between the first resistor (R2) and the second resistor (R3) of the potential divider,
**in that** the control unit (6) is configured to apply a control signal (IPHMAX-CTRL) to a base terminal of the first transistor (T1),

and **in that** the upper threshold value for a voltage corresponding to the phase current can be tapped off at the first centre tap (M1).

12. Device according to Claim 11, wherein the phase-current monitoring means (31) compares variables derived from the phase currents ($I_U$, $I_V$, $I_W$) with a lower threshold value and the control unit (6) sets the lower threshold value depending on operating parameters of the electric machine (1) and/or of the inverter (2), wherein a source terminal of the second transistor (T2) is connected to a second centre tap (M2) between the second resistor (R3) and the third resistor (R4) of the potential divider, and the lower threshold value for a voltage corresponding to the phase current can be tapped off at the second centre tap (M2).

**Revendications**

1. Procédé de détection des défauts sur une machine électrique (1) d'un véhicule automobile commandée par un onduleur (2), dans lequel
les courants de phase ($I_U$, $I_V$, $I_W$) de la machine électrique (1) sont déterminés et un défaut est détecté si au moins l'un des courants de phase ($I_U$, $I_V$, $I_W$) ou une grandeur qui en dérive sont supérieurs à une valeur de seuil supérieur prédéterminée, la valeur de seuil supérieur étant définie en fonction de paramètres de fonctionnement de la machine électrique (1) et/ou de l'onduleur (2),
**caractérisé en ce que**
un signal de commande (IPHMAX-CTRL) est appliqué sur la borne de base d'un premier transistor (T1) dont la borne de collecteur est raccordée par l'intermédiaire d'une résistance "pull-up" (R1) à la borne de grille d'un deuxième transistor (T2) suivi par un diviseur de tension formé par le raccordement en série de trois résistances (R2, R3, R4),
**en ce que** la borne de drain du deuxième transistor (T2) est raccordée par une première dérivation intermédiaire (M1) située entre la première résistance (R2) et la deuxième résistance (R3) du diviseur de tension et
**en ce que** la valeur de seuil supérieur est prélevée sur la première dérivation intermédiaire (M1) en tant que tension correspondant au courant de phase.

2. Procédé selon la revendication 1, dans lequel un défaut est détecté si au moins une grandeur dérivée des courants de phase ($I_U$, $I_V$, $I_W$) n'atteint pas une valeur de seuil inférieur prédéterminée, la valeur de seuil inférieur étant définie en fonction de paramètres de fonctionnement de la machine électrique (1) et/ou de l'onduleur (2) et dans lequel une borne de source du deuxième transistor (T2) est raccordée à une deuxième dérivation intermédiaire (M2) située entre la deuxième résistance (R3) et la troisième résistance (R4) du diviseur de tension, la valeur de seuil inférieur étant prélevée sur la deuxième dérivation intermédiaire (M2) en tant que tension correspondant au courant de phase.

3. Procédé selon l'une des revendications 1 ou 2, dans lequel la valeur de seuil supérieur et/ou la valeur de seuil inférieur sont sélectionnées parmi plusieurs valeurs de seuil conservées en mémoire.

4. Procédé selon l'une des revendications précédentes, dans lequel la valeur de seuil supérieur et/ou la valeur de seuil inférieur sont définies en fonction de l'état de fonctionnement de la machine électrique (1).

5. Procédé selon l'une des revendications 1 à 3, dans lequel la valeur de seuil supérieur et/ou la valeur de seuil inférieur sont définies en fonction de la tension ($U_{zk}$) d'un circuit intermédiaire.

6. Procédé selon l'une des revendications 1 à 5, dans lequel la valeur de seuil supérieur et/ou la valeur de seuil inférieur sont définies en fonction de la température d'un élément (3) de commutation de puissance, susceptible de se rompre électriquement, de l'onduleur (2).

7. Procédé selon l'une des revendications précédentes, dans lequel la valeur de seuil supérieur et/ou la valeur de seuil inférieur sont définies en fonction du niveau des courants de phase ($I_U$, $I_V$, $I_W$) et/ou en fonction des durées d'écoulement des courants de phase ($I_U$, $I_V$, $I_W$).

8. Procédé selon l'une des revendications précédentes, dans lequel la valeur de seuil supérieur et/ou la valeur de seuil inférieur sont définies en fonction de la tension collecteur-émetteur ou de la tension source-drain d'un élément (3) de commutation de puissance de l'onduleur (2).

9. Procédé selon l'une des revendications précédentes, dans lequel la valeur de seuil supérieur et/ou la valeur de seuil inférieur sont définies en fonction de la température d'un corps de refroidissement d'un élément (3) de commutation de puissance de l'onduleur (2).

10. Procédé selon l'une des revendications précédentes, dans lequel la valeur de seuil supérieur et/ou la valeur de seuil inférieur sont définies en fonction du courant de collecteur ou du courant de source d'un élément (3) de commutation de puissance de l'onduleur (2).

11. Dispositif de surveillance du fonctionnement d'une machine électrique (1) d'un véhicule automobile commandée par un onduleur (2), le dispositif présentant :

une surveillance (31) des courants de phase qui compare les courants de phase ($I_U$, $I_V$, $I_W$) ou les grandeurs qui en sont dérivées de la machine électrique (1) à une valeur de seuil supérieur prédéterminée et
une unité de commande (6) qui définit la valeur de seuil supérieur en fonction de paramètres de fonctionnement de la machine électrique (1) et/ou de l'onduleur (2),
**caractérisé en ce que**
la surveillance (31) des courants de phase présente un premier transistor (T1), un deuxième transistor (T2), une résistance "pull-up" (R1) et un diviseur de tension raccordé en aval du deuxième transistor (T2) et formé par le raccordement en série de trois résistances (R2, R3, R4),
**en ce que** le premier transistor (T1) présentant une borne de collecteur raccordée par l'intermédiaire d'une résistance "pull-up" (R1) à la borne de grille d'un deuxième transistor (T2), la borne de drain du deuxième transistor (T2) étant raccordée par une première dérivation intermédiaire (M1) située entre la première résistance (R2) et la deuxième résistance (R3) du diviseur de tension et
**en ce que** l'unité de commande (6) est conçue pour appliquer un signal de commande (IPHMAX-CTRL) sur la borne de base du premier transistor (T1) et **en ce que** la valeur de seuil supérieur peut être prélevée sur la première dérivation intermédiaire (M1) en tant que tension correspondant au courant de phase.

12. Dispositif selon la revendication 11, dans lequel la surveillance (31) des courants de phase compare des grandeurs dérivées des courants de phase ($I_U$, $I_V$, $I_W$) à une valeur de seuil inférieur, l'unité de commande (6) définissant la valeur de seuil inférieur en fonction de paramètres de fonctionnement de la machine électrique (1) et/ou de l'onduleur (2), la borne de source du deuxième transistor (T2) étant raccordée à une deuxième dérivation intermédiaire (M2) située entre la deuxième résistance (R3) et la troisième résistance (R4) du diviseur de tension et la valeur de seuil inférieur pouvant être prélevée sur la deuxième dérivation intermédiaire (M2) en tant que tension correspondant au courant de phase.

FIG. 1

EP 2 516 198 B1

FIG. 2

FIG. 3

**FIG. 4**

**FIG. 5**

**IN DER BESCHREIBUNG AUFGEFÜHRTE DOKUMENTE**

**In der Beschreibung aufgeführte Patentdokumente**

- DE 102006003254 A1
- DE 102007020509 A1
- EP 1050425 A2
- JP 2006129567 A
- US 20070093359 A1
- US 20090251831 A1